# EUROPÄISCHE PATENTSCHRIFT

(11) **EP 1 157 879 B1**
(45) Veröffentlichungstag und Bekanntmachung des Hinweises auf die Patenterteilung: **03.11.2004**
(21) Anmeldenummer: 01890009.2
(22) Anmeldetag: 15.01.2001
(51) Int. Cl.: B60M 1/23

(54) **Hängeklemme**
Suspension clamps
Pinces de suspension

(30) Priorität: 10.05.2000 AT 2000343 U
(43) Veröffentlichungstag der Anmeldung: 28.11.2001
(73) Patentinhaber: Röhl, Hans Heinrich, 1120 Wien (AT)
(72) Erfinder: Röhl, Hans Heinrich, 1120 Wien (AT)
(74) Vertreter: Rippel, Andreas, Dipl.-Ing.

(56) Entgegenhaltungen:
- AT-B- 398 556
- DE-A- 1 944 776
- US-A- 1 643 749

## Beschreibung

Die Erfindung bezieht sich auf eine Hängeklemme zur Verbindung von Tragseilen und Fahrleitungen für elektrisch betriebene Schienenfahrzeuge mittels eines Hängeseils, mit zwei Klemmbacken, die ein Tragseil oder einen Fahrdraht über Greifer festklemmen, wobei eine beide Klemmbacken durchsetzende Schraube zur Klemmung der beiden Klemmbacken angeordnet ist.

Bei bekannten Hängeklemmen dieser Art wird das Hängeseil durch eine Kausche aufgenommen, die an der den Greifern gegenüberliegenden Seite angeordnet ist. Für den Normalfahrbetrieb haben sich solche Hängeklemmen durchaus bewährt. Bei Hochgeschwindigkeitszügen kann es jedoch zu einem Hochheben in der Kausche und damit zu einer kurzzeitigen Stromunterbrechung kommen.

Man hat schon versucht, diesem Übelstand dadurch abzuhelfen, daß das Hängeseil mittels Kerbhülsen befestigt wird. Durchgeführte Dauerversuche haben jedoch gezeigt, daß durch die auftretende Kerbwirkung das Hängeseil schon nach einer relativ kurzen Anzahl von Lastwechseln bricht. Überdies ist eine einmal festgelegte Länge des Hängeseils nicht mehr zu ändern.

Die Erfindung hat es sich zum Ziel gesetzt, eine Hängeklemme zu schaffen, bei der keine Kerbwirkung auftritt, wobei überdies die Länge des Hängeseils leicht veränderbar sein soll. Erreicht wird dies dadurch, daß die beiden Klemmbacken an ihrer den Greifern gegenüberliegenden Seite miteinander verbunden sind und zwischen dieser Verbindung und der Schraube eine durch beide Klemmbacken gebildete Rille zur Klemmung des Hängeseils angeordnet ist.

Bei einer erfindungsgemäßen Hängeklemme gemäß Anspruch 1 wird das Hängeseil auf seiner gesamten Länge nicht durch irgendwelche Kerbwirkungen beschädigt, es wird lediglich durch Reibung gehalten. Durch Lockern der Schraube kann das Hängeseil überdies in der Rille verschoben werden, sodaß die Länge leicht veränderbar ist.

Bei einer zweckmäßigen Ausführungsform der Erfindung bestehen die beiden Klemmbacken aus einem Stück und sind über einen mit einem Durchlaß für das Hängeseil versehenen bogenförmigen Verbindungsteil miteinander verbunden.

Es ist ferner auch bei der erfindungsgemäßen Hängeklemme vorteilhaft, wenn, so, wie bei der Hängklemme nach der AT 398.556 B, die Anlageflächen für Schraube und zugehöriger Mutter kegelförmig oder dgl. ausgebildet sind.

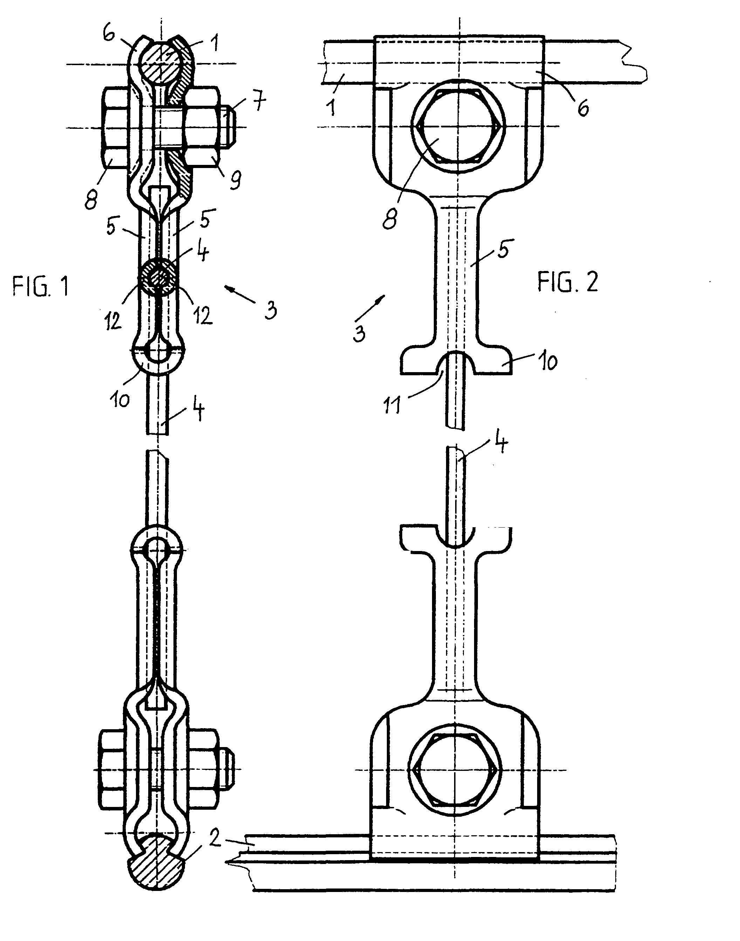

Nachstehend ist die Erfindung anhand eines in den Zeichnungen dargestellten Ausführungsbeispieles näher beschrieben, ohne auf dieses Beispiel beschränkt zu sein. Dabei zeigen die Fig. 1 und Fig. 2 eine erfindungsgemäße Hängeklemme in Seiten- und Vorderansicht, wobei in Fig. 1 ein Teil geschnitten dargestellt ist.

In den Zeichnungen ist mit 1 ein Tragseil und mit 2 ein Fahrdraht bezeichnet, die durch Hängeklemmen 3 sowie ein Hängeseil 4 miteinander verbunden sind. Die beiden Hängeklemmen 3 sind gleich ausgebildet, es wird daher nur die obere Hängeklemme 3 beschrieben.

Die Hängeklemme 3 weist zwei Klemmbacken 5 auf, die mittels Greifern 6 das Tragseil 1 (bzw. den Fahrdraht 2) festklemmen. Zur Erzielung einer Klemmwirkung sind die Klemmbacken 5 mit Durchgangsöffnungen versehen, durch die eine Schraube 7 mit einem Schraubenkopf 8 gesteckt ist. Auf diese Schraube 7 ist eine Mutter 9 aufgeschraubt, sodaß die beiden Klemmbacken 5 zueinander gepreßt werden können und dadurch das Tragseil 1 festgeklemmt wird.

Wie aus dem Schnitt aus Fig. 1 ersichtlich ist, sind die Anlageflächen für den Schraubenkopf 8 konisch ausgebildet. In gleicher Weise sind auch die Anlageflächen für die Mutter 9 konisch. Da der Durchmesser der Durchgangsöffnungen für die Schraube größer als der Durchmesser der Schraube ist, können sich die beiden Klemmbacken 5 in Abhängigkeit vom Durchmesser des Tragseils 1 in Bezug auf die Schraubenlängsachse schräg stellen, wobei aber trotzdem sowohl der Schraubenkopf 8 als auch die Mutter 9 längs ihres gesamten Umfanges an den Klemmbacken anliegen.

Die beiden Klemmbacken 5 bestehen aus einem Stück und sind an ihrer den Greifern 6 gegenüberliegenden Seite durch einen bogenförmigen Verbindungsteil 10 miteinander verbunden, der einen Durchlaß 11 für das Hängeseil 4 besitzt. Zwischen diesem Verbindungsteil 10 und der Schraube 7 ist eine durch beide Klemmbacken 5 gebildete Rille 12 ausgeformt, in der das Hängeseil 4 festgeklemmt ist.

Das Hängeseil 4 wird in dieser Rille 12 lediglich durch Reibung gehalten und es wird auf das Hängeseil 4 keinerlei Kerbwirkung ausgeübt. Durch Lockern der Mutter 9 wird der Reibschluß zwischen den Klemmbacken 5 und dem Hängeseil 4 aufgehoben bzw. verringert und das Hängeseil 4 kann in der Rille 12 verschoben werden. Dadurch ist eine Einstellung des Abstandes zwischen dem Tragseil 1 und dem Fahrdraht 2 möglich.

Im Rahmen der Erfindung sind zahlreiche Abänderungen möglich. So müßten die Klemmbacken 5 nicht einstückig ausgebildet sein. Die beiden Klemmbacken 5 könnten auch an ihrem der Schraube 7 gegenüberliegenden Ende ebenfalls durch Schrauben miteinander verbunden werden.

## Patentansprüche

1. Hängeklemme zur Verbindung von Tragseilen (1) und Fahrleitungen (2) für elektrisch betriebene Schienenfahrzeuge mittels eines Hängeseils (4), mit zwei Klemmbacken (5), die ein Tragseil (1) oder einen Fahrdraht (2) über Greifer (6) festklemmen können, wobei eine beide Klemmbacken (5) durchsetzende Schraube (7, 8) zur Klemmung der beiden Klemmbacken (5) angeordnet ist, **dadurch gekennzeichnet, daß** die beiden Klemmbacken (5) an ihrer den Greifern (6) gegenüberliegenden Seite miteinander verbunden sind und zwischen dieser Verbindung (10) und der Schraube (7, 8) eine durch beide Klemmbacken (5) gebildete Rille (12) zur Klemmung des Hängeseils (4) angeordnet ist.

2. Hängeklemme nach Anspruch 1, **dadurch gekennzeichnet, daß** die beiden Klemmbacken (5) aus einem Stück bestehen und über einen mit einem Durchlaß (11) für das Hängeseil (4) versehenen bogenförmigen Verbindungsteil (10) miteinander verbunden sind

3. Hängeklemme nach Anspruch loder 2, **dadurch gekennzeichnet, daß** in an sich bekannter Weise die Anlageflächen für Schraube (7, 8) und zugehöriger Mutter (9) kegelförmig oder dgl. ausgebildet sind.

## Claims

1. Hanging clamp for the connection of carrying ropes (1) and railway catenaries (2) for electrically operated rail-mounted vehicles by means of a hanging rope (4)with two clamping jaws (5) which clamp a carrying rope (1) or a contact wire (2) via grip arms (6), whereby a screw (7, 8) interspersing both clamping jaws (5) is arranged for wedging the two clamping jaws (5), **characterized in that** the two clamping jaws (5) are connected to each other at their side lying opposite to the grip arms (6) and that between this connection (10) and the screw (7, 8) a groove (12) formed by both clamping jaws (5) is arranged for wedging the hanging rope (4).

2. Hanging clamp according to claim 1, **characterized in that** the two clamping jaws (5) consist of one piece and are connected to each other by an arc-shaped springy connection par (10) provided with a passage (11) for the hanging rope (4).

3. Hanging clamp according to claim 1 or 2, **characterized in that** , the tray surfaces for screw (7, 8) and associated nut (9) are formed conically or such in an actually well-known way.

## Revendications

1. Griffe de suspension pour la jonction des câbles porteurs (1) et des caténaires (2) pour des véhicules sur rail actionnés électriquement au moyen d'un câble de suspension (4) à deux mâchoires de serrage (5) qui fixent un câble porteur (1) ou une ligne de contact (2) par des griffes (6), à quoi une vis (7, 8) pénétrante les deux .mâchoires de serrage (5) est disposée pour coincer les deux mâchoires de serrage (5), **caractérisé en ce que** les deux mâchoires de serrage (5) sont reliées à leur côté en face des griffes (6) et qu'entre cette jonction (10) et la vis (7, 8) une cannelure (12) formée par les deux mâchoires de serrage (5) est disposée pour coincer le câble de suspension (4).

2. Griffe de suspension selon la revendication 1, **caractérisé en ce que** les deux mâchoires de serrage (5) se composent d'un seul morceau et sont reliées à travers une partie de jonction (10) élastique arquée équipée d'un passage (11) pour le câble de suspension (4).

3. Griffe de suspension selon les revendications 1 ou 2, **caractérisé en ce que** les tablettes de rangement pour la vis (7, 8) et l'écrou correspondant (9) sont formées comme cônes ou tels de manière en soi connue.
